# EUROPÄISCHE PATENTANMELDUNG

(11) **EP 1 555 193 A2**
(43) Veröffentlichungstag der Anmeldung: **20.07.2005**
(21) Anmeldenummer: 05000659.2
(22) Anmeldetag: 14.01.2005
(51) Int. Cl.: B62D 53/08

(54) **Fahrzeuganhänger mit versetztem Königszapfen**

(30) Priorität: 14.01.2004 DE 102004001918
(71) Anmelder: Willing, Hubert, 48691 Vreden (DE)
(72) Erfinder: Willing, Hubert, 48691 Vreden (DE)
(74) Vertreter: Habbel, Hans-Georg, Dipl.-Ing.

(57) **Zusammenfassung**

Die Erfindung bezieht sich auf einen Fahrzeuganhänger mit einem an der Unterseite (2) des Anhängers (1) angeordneten Königszapfen (3), der im vorderen, einer Zugmaschine (7) zugewandten Bereich des Anhängers (1) angeordnet ist und in eine Sattelkupplung (9) der Zugmaschine (7) einführbar ist, wobei der Königszapfen (3) über eine im wesentlichen horizontal schwenkbare bzw. drehbare Halterung mit dem Anhänger (3) verbunden ist, wobei der Königszapfen versetzt zum Drehpunkt (6) der Halterung angeordnet ist.

## Beschreibung

Die Erfindung betrifft Fahrzeuganhänger mit versetztem Königszapfen entsprechend des Oberbegriffes des Hauptanspruches.

Aus der Praxis sind Fahrzeuganhänger bekannt, die mit der Zugmaschine über einen Königszapfen verbindbar sind, wobei der Königszapfen an der Unterseite des Anhängers in dessen vorderem Bereich angeordnet ist und nach unten abstehend ausgebildet ist und in eine Sattelkupplung der Zugmaschine einführbar ist.

Insbesondere bei sehr langen Anhängern kann es zu einem unbefriedigenden Kurvenverhalten der Zugmaschine mitsamt angehängtem Anhänger kommen, d. h. Probleme können dann beispielsweise auftauchen, wenn eine Zugmaschine mit sehr langem, angehängten Anhänger in einen Kreisverkehr hineinfährt und der Kurvenradius des Anhängers bei Umfahren des Kreisverkehrs nicht groß genug ist und es zu einem Überfahren der Mitte des Kreisverkehrs kommen kann. Dieser zum Teil zu geringe Kurvenradius von Anhängern begrenzt die Länge der Fahrzeuganhänger, was wiederum dazu führt, daß weniger Transportgut pro Fahrt transportiert werden kann.

Der Erfindung liegt die Aufgabe zugrunde, einen Fahrzeuganhänger derart auszubilden, daß der an einer Zugmaschine angehängte Anhänger beim Kurvenfahren einen größeren Kurvenradius beschreibt, wobei der Anhänger kostengünstig ausgebildet sein soll.

Diese der Erfindung zugrundeliegende Aufgabe wird durch die Lehre des kennzeichnenden Teiles des Hauptanspruches gelöst.

Mit anderen Worten ausgedrückt wird ein Fahrzeuganhänger mit einem Königszapfen vorgeschlagen, wobei der Königszapfen beweglich über eine Halterung mit dem Anhänger verbunden sein soll, wobei durch diese bewegliche Halterung eine schwenk- oder kreisförmige Bewegung des Königszapfens möglich sein soll, wobei der Königszapfen versetzt zum Drehpunkt der mit dem Anhänger verbundenen Halterung ausgebildet sein soll.

Durch diesen Versatz des Königszapfens zum Drehpunkt der ihn tragenden Halterung ergibt sich eine Hebelwirkung beim Kurvenfahren des Anhängers, die zu einem größeren Kurvenradius des Anhängers führt.

Vorteilhafte Ausgestaltungen der Erfindung werden in den Unteransprüchen erläutert.

In vorteilhafter Ausgestaltung ist die Halterung als Drehkranz ausgebildet, um eine stabile Ausbildung der Halterung zu erreichen und um eine besonders gute Beweglichkeit des gehaltenen Königszapfens auszubilden.

In vorteilhafter Ausgestaltung kann die Halterung auch z. B. als Schwenkarm ausgebildet sein, um hierdurch eine besonders kostengünstige Ausbildung zu ermöglichen.

In vorteilhafter Ausgestaltung der Erfindung kann der Königszapfen unrund ausgebildet sein, so daß er drehfest in der Sattelkupplung gehalten sein kann, um allein durch diese Ausbildung des Königszapfens eine Übertragung der beim Kurvenfahren zwischen Zugmaschine und Anhänger auftretenden Kräfte zu übernehmen. Dabei kann beispielsweise die Sattelkupplung eine entsprechend unrund ausgebildete Ausbildung haben, um die drehfeste Halterung eines entsprechend ausgebildeten Königszapfens zu ermöglichen.

In vorteilhafter Ausgestaltung der Erfindung kann der Anhänger neben einem Königszapfen einen zusätzlichen Lenkkeil aufweisen, der von der Sattelkupplung der Zugmaschine aufgenommen wird.

In vorteilhafter Ausgestaltung ist der Königszapfen vom Drehpunkt der Halterung in Fahrtrichtung des Anhängers nach vorne versetzt ausgebildet, wobei je nach Anwendungszweck der Königszapfen auch an unterschiedlichen Orten positioniert sein kann.

Ein Ausführungsbeispiel der Erfindung wird nachfolgend in den Zeichnungen dargestellt, wobei
- Fig. 1: in einer Ansicht von unten den Kupplungsbereich zwischen Anhänger und Zugmaschine darstellt,
- Fig. 2: zeigt in einer seitlichen Darstellungsweise den Kupplungsbereich zwischen Anhänger und Zugmaschine,
- Fig. 3: zeigt in einer Ansicht wiederum von unten einen Anhänger mitsamt Kupplungsbereich mit der Zugmaschine und
- Fig. 4: zeigt in einer Ansicht von unten den Kupplungsbereich zwischen Anhänger und Zugmaschine bei Kurvenfahrt.

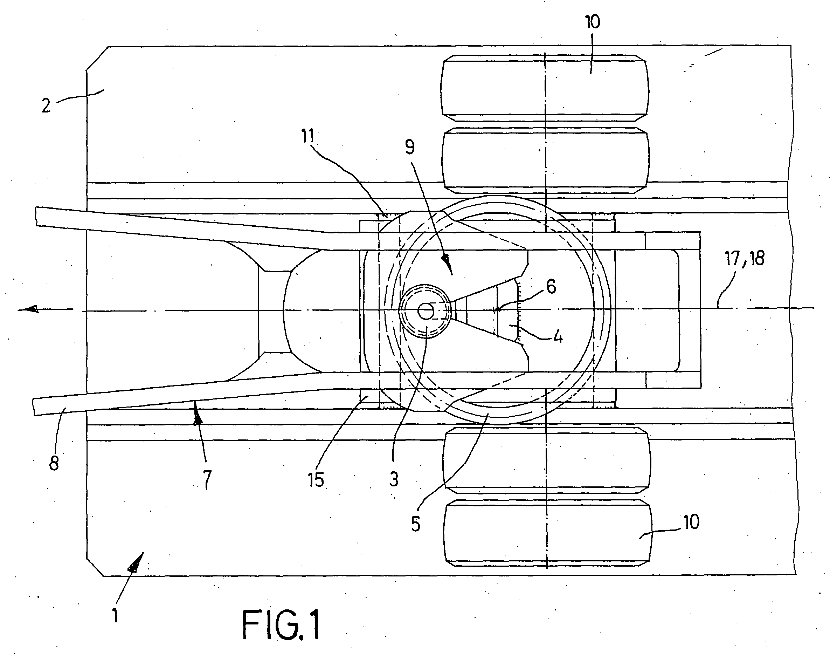

Bezugnehmend auf Fig. 1 ist der vordere Bereich eines Anhängers 1 dargestellt, wobei an der Unterseite 2 des Anhängers ein Königszapfen 3 angeordnet ist und von der Unterseite des Anhängers nach unten, Richtung Untergrund abstehend ausgebildet ist sowie ein Lenkkeil 4, der wiederum an der Unterseite des Anhängers 1 in Richtung Untergrund abstehend ausgebildet ist. Sowohl der Königszapfen 3 als auch der Lenkkeil 4 sind an einem Drehkranz 5 ausgebildet, der an der Unterseite des Anhängers 1 befestigt ist, d. h. sowohl der Königszapfen 3 als auch der Lenkkeil 4 sind um einen Drehpunkt 6 des Drehkranzes 5 herum drehbar ausgebildet, wobei sich eine im wesentlichen horizontale Beweglichkeit des Königszapfens 3 und des Lenkkeiles 4 an der Unterseite des Anhängers 1 ergibt.

In Fig. 1 ist der Anhänger 1 bereits mit der Zugmaschine 7 verbunden, von der lediglich ein Rahmen 8 dargestellt ist, an dem sich eine Sattelkupplung 9 befindet, deren Maul einerseits den Königszapfen 3 aufnimmt sowie den Lenkkeil 4. Darüber hinaus sind von der Zugmaschine 7 die Räder 10 dargestellt.

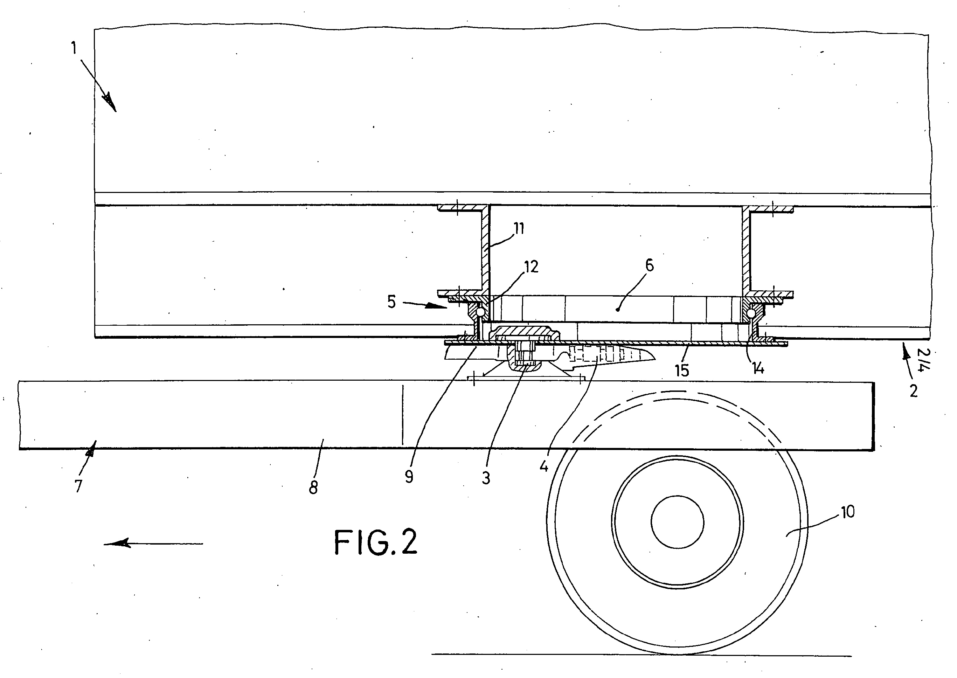

Fig. 2 zeigt eine seitliche Darstellung des Kupplungsbereiches zwischen Anhänger 1 und Zugmaschine 7, wobei es sich bei dem Anhänger 1 um einen sogenannten Sattelauflieger in diesem Ausführungsbeispiel handelt. Es wird ersichtlich, daß an einem Träger 11 die Oberschale 12 des Drehkranzes 5 angeordnet ist und an einer Unterschale 14 des Drehkranzes 6 ist an einer Platte 15 des Drehkranzes der Königszapfen 3 sowie der Lenkkeil 4 angeordnet. Zwischen Unterschale 14 und Oberschale 12 ist ein Lager angeordnet. Wiederum wird ersichtlich, daß der Drehpunkt 6 des Drehkranzes 5 seitlich versetzt zum Königszapfen 3 und zu Teilen des Lenkkeiles 4 ausgebildet ist, wobei der Königszapfen 3 in Fahrtrichtung gesehen vor dem Drehpunkt 6 angeordnet ist.

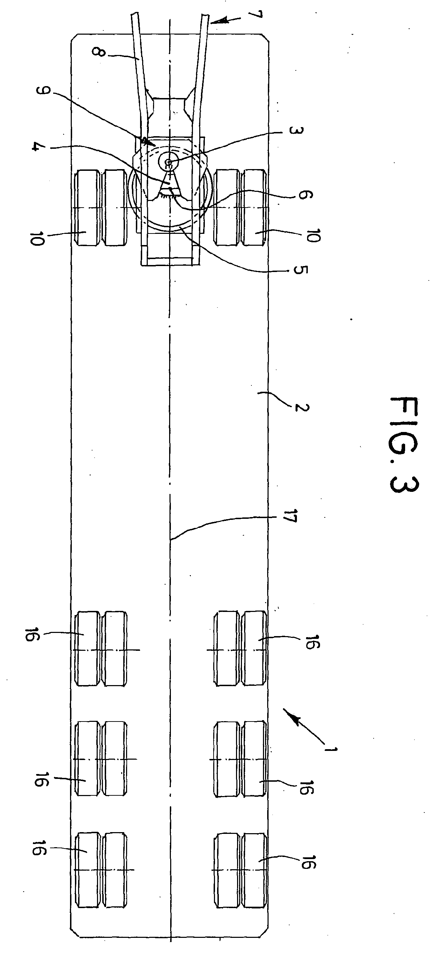

Die gesamte Unterseite eines Anhängers 1 mitsamt des Drehkranzes 5 sowie mehrerer Räder 16 des Aufliegers ist in Fig. 3 dargestellt.

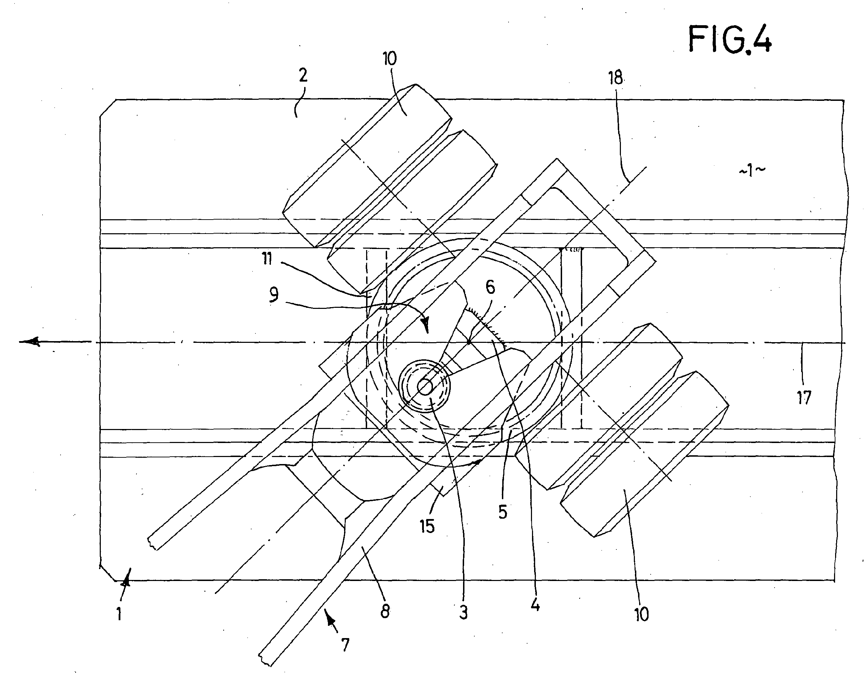

Die Situation des Kupplungsbereiches zwischen Anhänger 1 sowie Zugmaschine 7 ist in Fig. 4 dargestellt. Da mit dem Rahmen 8 der Zugmaschine 7 die Sattelkupplung 9 verbunden ist, weist die Sattelkupplung 9 selbstverständlich in die Richtung der Zugmaschine 7 wie auch die entsprechenden Räder 10 der Zugmaschine. Da wiederum mit der Sattelkupplung 9 der Königszapfen 3 sowie der Lenkkeil 4 von der Sattelkupplung 9 gehalten werden, bewegt sich somit der Lenkzapfen 3 von seiner in Fig. 1 dargestellten Position auf der Mittellinie 17 des Anhängers zu der in Position 4 dargestellten Position, d. h. der Zapfen 3 liegt in diesem Ausführungsbeispiel stets auf der Mittelachse 18 der Zugmaschine, so daß sich in dieser Position ein Versatz des Königszapfens 3 zur Mittellinie bzw. Mittelachse 17 des Anhängers 1 ergibt. Hieraus ergeben sich Hebelkräfte, die über den Königszapfen 3 und über den Lenkkeil 4 auf den Anhänger 1 übertragen werden und die zum Kurvenäußeren wirken. Es wird erreicht, daß der beim Kurvenfahren bewegte bzw. gezogene Anhänger 1 eine zum Kurvenäußeren gerichtete Kraft zusätzlich erfährt, wodurch der Innenradius des Anhängers beim Kurvenfahren größer ist als wenn der Königszapfen 3 unmittelbar in Höhe des Drehpunktes 6 des Drehkranzes 5 angeordnet wäre.

Die Quantität der zum Kurvenäußeren gerichteten Kräfte kann durch eine unterschiedliche Entfernung des gehaltenen Königszapfens 3 zum Drehpunkt 6 des Drehkranzes variiert werden. Anstatt des dargestellten Drehkranzes kann in einer weiteren Ausführungsform der Königszapfen 3 auch lediglich an einem nicht drehbaren, jedoch schwenkbaren Halterungselement mit dem Anhänger 1 verbunden werden, wodurch sich bei einem Versatz des gehaltenen Königszapfens 3 von dem Schwenkmittelpunkt bzw. Drehmittelpunkt der Halterung der gewünschte Hebeleffekt zum Kurvenäußeren beim Kurvenfahren des Anhängers ergibt. Anstatt des Drehkranzes 5 kann beispielsweise lediglich ein Schwenkhebel verwandt werden.

Der in den Zeichnungen dargestellte Lenkkeil 4 kann selbstverständlich jede andere geeignete Form bei entsprechender Anpassung der Sattelkupplung 9 aufweisen. Darüber hinaus wäre eine weitere Ausführungsform, wenn der Königszapfen 3 nicht wie in diesem Ausführungsbeispiel rund ausgebildet wäre, sondern unrund, z. B. oval oder eckig, um allein durch diese Ausbildung ― bei entsprechender Ausbildung des Maules der Sattelkupplung 9 ― eine drehfeste Ausbildung des Königszapfens 3 in der Sattelkupplung 9 zu erreichen, so daß in diesem Fall z. B. auf einen zusätzlichen Lenkkeil verzichtet werden könnte.

## Patentansprüche

1. Fahrzeuganhänger mit einem an der Unterseite (2) des Anhängers (1) angeordneten Königszapfen (3), der im vorderen, einer Zugmaschine (7) zugewandten Bereich des Anhängers (1) angeordnet ist und in eine Sattelkupplung (9) der Zugmaschine (7) einführbar ist, **gekennzeichnet durch** den Königszapfen (3), der über eine im wesentlichen horizontal schwenkbare bzw. drehbare Halterung mit dem Anhänger verbunden ist, wobei der Königszapfen (3) versetzt zum Drehpunkt (6) der Halterung angeordnet ist.

2. Fahrzeuganhänger gemäß Anspruch 1, **gekennzeichnet durch** die als Drehkranz (5) ausgebildete Halterung.

3. Fahrzeuganhänger gemäß Anspruch 1, **gekennzeichnet durch** die als Schwenkarm ausgebildete Halterung.

4. Fahrzeuganhänger gemäß einem der vorhergehenden Ansprüche, **gekennzeichnet durch** den unrund ausgebildeten Königszapfen, der drehfest in der Sattelkupplung (9) gehalten ist.

5. Fahrzeuganhänger gemäß einem der vorhergehenden Ansprüche, **gekennzeichnet durch** einen an der Halterung benachbart zum Königszapfen (3) ausgebildeten, in die Sattelkupplung einführbaren Lenkkeil (4).

6. Fahrzeuganhänger gemäß einem der vorhergehenden Ansprüche, **gekennzeichnet durch** den Königszapfen (3), der vom Drehpunkt (6) der Halterung in Fahrtrichtung des Anhängers (1) nach vorne versetzt ausgebildet ist.
